# EUROPEAN PATENT APPLICATION

(11) **EP 4 450 849 A2**
(43) Date of publication of application: **23.10.2024**
(21) Application number: 24192388.7
(22) Date of filing: 23.02.2022
(51) Int. Cl.: F16H 57/02

(54) **POWER TRANSMISSION UNIT**

(30) Priority: 26.02.2021 JP 2021030253
(62) Divisional of application: 22158181.2
(71) Applicant: Kanzaki Kokyukoki Mfg. Co., Ltd., Amagasaki Hyogo (JP)
(72) Inventor: KIYOOKA, Koji, Hyogo, 2-18-1 Inadera (JP); IMA, Akihiro, Hyogo, 2-18-1 Inadera (JP); NISHIZAWA, Takashi, Hyogo, 2-18-1 Inadera (JP)
(74) Representative: Wunderlich & Heim Patentanwälte PartG mbB

(57) **Abstract**

A power transmission unit (41a) includes a motor (70); and a transmission case (42a) to enclose an input shaft (72), an output shaft (60), and a gear mechanism (80) that transmits driving power between the input shaft (72) and the output shaft (60). A motor case (120) attached to the transmission case (42a) on a side opposite the gear mechanism (80) of the transmission case has a cylindrical shape whose cross section is constant throughout a direction orthogonal to an axial direction of the motor case, and the motor (70) is placed inside the motor case.

## Description

### BACKGROUND

### Technical Field

The present disclosure relates to a power transmission unit.

### Related Art

Conventionally, vehicles such as lawn mowing vehicles equipped with lawn mower blades, in which the wheels can be driven by an electric motor to travel, have been known. U.S. Patent Application No. 2009/0069964 and JP 2012-154375 A disclose a lawn mowing vehicle in which left and right wheels are driven by the same electric motor. JP 2014-117026 A discloses a lawn mowing vehicle in which the left and right wheels can be driven by motors independently of each other, with the left wheel driven by a left electric motor and the right wheel driven by a right electric motor.

In the above disclosures, the vehicles in which the left and right wheels are driven by one or two motors use a power transmission unit to transmit driving power of the motor(s) to the wheels. In the power transmission unit disclosed in JP 2012-154375 A, it is suggested that a motor case in which a motor is enclosed is fixed to a transmission case enclosing a gear mechanism to transmit driving power from an input shaft to an output shaft. However, since the motor case has a complicated shape, there is a room for improvement to reduce the manufacturing cost of the entire power transmission unit.

Furthermore, when fixing the motor case to the transmission case, if misalignment exists between a center axis of an inner circumferential surface formed in the motor case, to which a stator core of the motor is fixed, and a center axis of a hole formed in the transmission case, through which a motor shaft of the motor passes, it becomes difficult to assemble the motor case to the transmission case. There is also a room for improvement to reduce the manufacturing cost of the power transmission unit. If the center axis of the inner circumferential surface is misaligned with the center axis of the hole, noise and vibration increase.

### SUMMARY

An object of the present disclosure is to reduce a manufacturing cost of a power transmission unit in which a motor case is fixed to a transmission case.

According to a first aspect of the disclosure, a power transmission unit includes: a motor; and a transmission case to enclose an input shaft, an output shaft, and a gear mechanism that transmits driving power between the input shaft and the output shaft, wherein a motor case is attached to the transmission case on a side opposite the gear mechanism of the transmission case, the motor case has a cylindrical shape whose cross section is constant throughout a direction orthogonal to an axial direction of the motor case, and the motor is placed inside the motor case.

According to a second aspect of the disclosure, a power transmission unit includes: a motor; and a transmission case to enclose an input shaft, an output shaft, and a gear mechanism that transmits driving power between the input shaft and the output shaft, wherein the motor is disposed inside a motor case that is attached to the transmission case on a side opposite the gear mechanism of the transmission case, the input shaft functions as a motor shaft of the motor, the transmission case has a hole through which the input shaft passes, and a centering structure is provided at one or both of the transmission case and the motor case to align a center axis of the hole with a center axis of an inner circumferential surface of the motor case that fixes a stator core composing the motor.

### BRIEF DESCRIPTION OF THE DRAWINGS

Embodiment(s) of the present disclosure will be described based on the following figures, wherein:
FIG. 1 is a perspective view illustrating a vehicle equipped with a power transmission unit according to an embodiment of the present disclosure;
FIG. 2A is a cross sectional view of the power transmission unit for a right wheel of the vehicle according to the embodiment shown in FIG. 1, which is taken along a plane orthogonal to a vertical direction;
FIG. 2B is a partially enlarged diagram illustrating a rear part of FIG. 2A;
FIG. 3 is a cross sectional view taken along line G-G of FIG. 2B;
FIG. 4 is an exploded cross sectional view just before assembly into the state shown in FIG. 2B;
FIG. 5 is a perspective view illustrating an example of a motor case according to the embodiment;
FIG. 6 is a partially enlarged cross sectional view of the two rear wheels corresponding to a cross sectional view taken along line I-I of FIG. 2B;
FIG. 7 is a perspective view with some parts omitted illustrating the power transmission unit for the right side wheel of the vehicle according to the embodiment shown in FIG. 1;
FIG. 8 is a cross sectional view taken along line J-J of FIG. 2B;
FIG. 9A is a diagram illustrating another example having a different transmission case from the embodiment shown in FIG. 2A;
FIG. 9B is a partially enlarged diagram illustrating a rear part of FIG. 9A;
FIG. 9C is a diagram illustrating another example having a different transmission case from the embodiment shown in FIG. 4;
FIG. 9D is a diagram illustrating another example having a different transmission case from the embodiment shown in FIG. 6;
FIG. 9E is a diagram illustrating another example which is different from the embodiment shown in FIG. 8, in that no brake rotor is mounted on an intermediate shaft and only one brake rotor is mounted on an input shaft;
FIG. 10 is a diagram illustrating another example having a different power transmission unit from the embodiment shown in FIG. 2B;
FIG. 11 is a cross sectional view taken along line K-K of FIG. 10;
FIG. 12 is an exploded cross sectional view with some parts omitted just before assembly into the state shown in FIG. 10;
FIG. 13A is a perspective view illustrating another example of the motor case different from that of the embodiment;
FIG. 13B is a diagram illustrating another example having a different transmission case from the embodiment shown in FIG. 10;
FIG. 13C is a diagram illustrating another example having a different transmission case from the embodiment shown in FIG. 12;
FIG. 14 is a diagram illustrating another example of the power transmission unit different from the embodiment shown in FIG. 2B;
FIG. 15 is a cross sectional view taken along line M-M of FIG. 14;
FIG. 16 is a perspective view of the motor case removed from FIG. 14;
FIG. 17 is a partially enlarged diagram illustrating another example of the power transmission unit different from the embodiment shown in FIG. 2B;
FIG. 18 is a cross sectional view taken along line P-P of FIG. 17; and
FIG. 19 is a diagram illustrating another example of the power transmission unit different from the embodiment shown in FIG. 14.

### DESCRIPTION OF EXEMPLARY EMBODIMENTS

Embodiments of the present disclosure will be described below in detail with reference to the drawings. In the following, a power transmission unit mounted on an lawn mowing vehicle as a working vehicle is described, but the vehicle mounting the power transmission unit of the present disclosure is not limited thereto, and may be a work vehicle equipped with a work machine capable of performing at least one task including snow removal, excavation, civil engineering, and agricultural work, or an off-road type utility vehicle having a cargo bed and traveling on uneven terrain (Utility Vehicle), or an all-terrain vehicle (ATV) called a buggy, or a Recreational Vehicle (RV), or a Recreational Off-highway Vehicle (ROV). In the following, the electric vehicle, in which two rear wheels are driven with two motors, respectively, is described as an example, but it may be configured so that two front wheels are driven with two motors, respectively. Also in the following, a left-right lever-type operator with left and right operating levers is described as only an example, but the present disclosure is not limited thereto; a steering handle may be used as a steering device and an accelerator pedal provided in front of a seat may be used as an accelerator device. In the following description, the same elements are denoted by identical reference numerals throughout all the drawings.

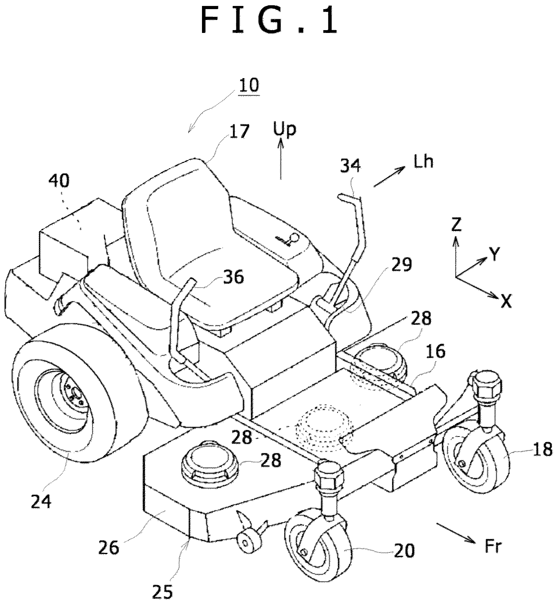

FIGS. 1 through 4 and FIGS. 6 through 8 show a first embodiment of the present disclosure. In the drawings referred to below, a front-and-rear direction, a right-and-left direction, and a vertical direction are indicated by X, Y, and Z, respectively. In the drawings referred to below, a side indicated by Fr and a side indicated by Lh are defined as the front side and the left side, respectively. X, Y, and Z are orthogonal to each other.

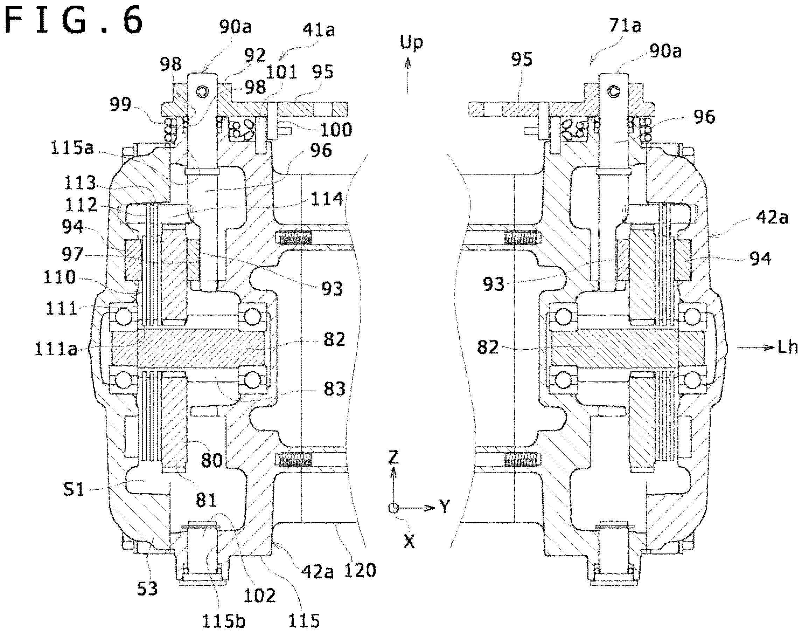

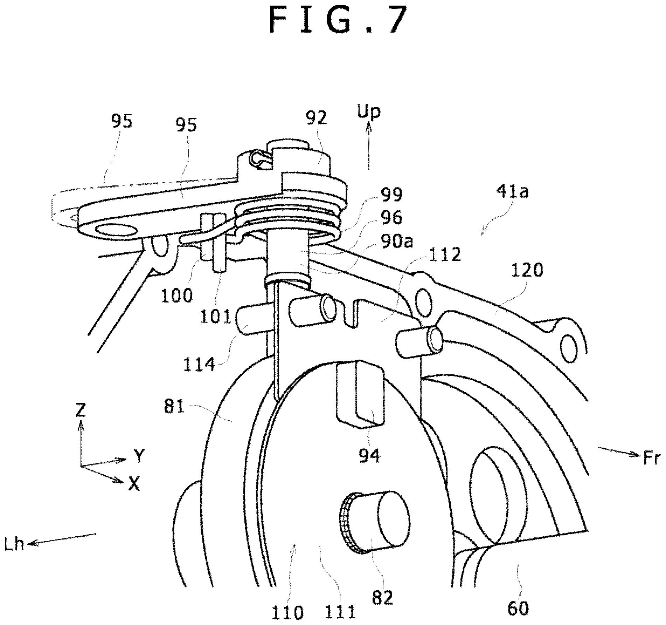

First, the general configuration of a lawn mowing vehicle 10 is described, and then power transmission units 41a, 71a (see FIGS. 6 and 7) mounted on a lawn mowing vehicle 10 are described in detail. The lawn mowing vehicle 10, which is of the riding type on which no engine is mounted, includes a main frame 16 comprising a body, two caster wheels 18, 20 constituting left and right front wheels, two wheels 24 constituting left and right rear wheels, a lawn mower 25 as the working machine, left and right two operation levers 34, 36, and a power source unit 40 including a battery. In FIG. 1, the left rear wheel, which is hidden by the body, is invisible.

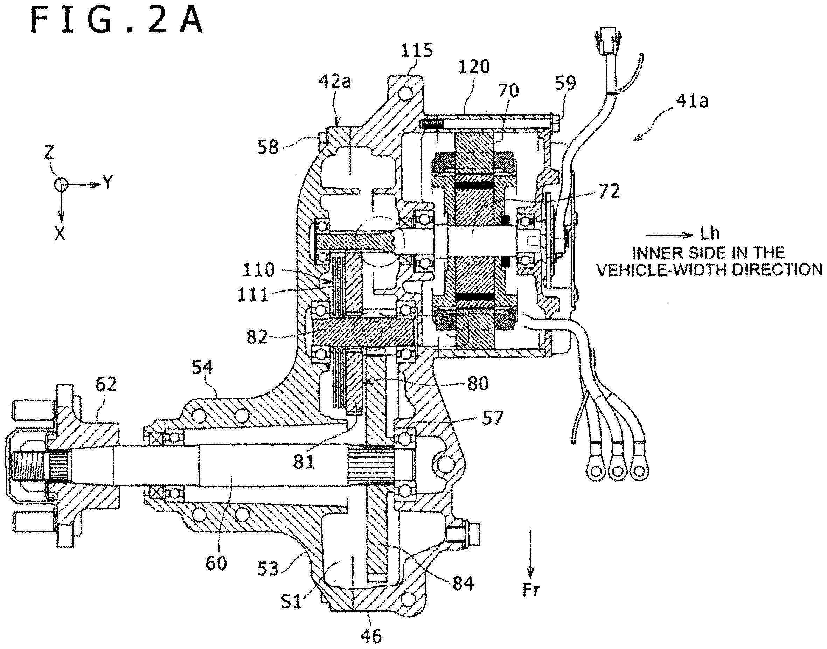

A driver's seat 17 disposed on the upper side of the body is fixed to the main frame 16 at the middle point in the front-and-rear direction. The left and right caster wheels 18, 20 are supported on the front side of the main frame 16. As each of the caster wheels 18, 20 is freely rotatable around a vertical axis, the vehicle can turn more than 360 degrees on horizontal terrain. The left and right rear wheels 24 are supported on the rear side of the main frame 16. The left and right rear wheels 24 are main driving wheels and are driven by left and right electric motors 70 for traveling, respectively, as described below (see FIG. 2A).

Instead of the two caster wheels 18, 20, only one caster wheel, or three or more caster wheels may be attached to the lawn mowing vehicle 10. The caster wheels and the driving wheels may be switched in position; i.e., the front-and-rear direction.

The lawn mower 25 is supported by the main frame 16 under the body at the middle point in the front-and-rear direction. The lawn mower 25 includes a mower deck 26 and three lawn mower blades (not shown) as a mowing rotary tool, each of which is rotatable around a vertical axis inside the mower deck 26. The rotation of the lawn mower blades makes it possible to break up and mow grass, etc. Each of the lawn mower blades is driven by a motor 28 for the mower.

The rotation of the lawn mower blades makes it possible to mow the lawn, and the mowed grass is discharged from the inside of the mower deck 26 to one of the outside thereof in the left-and-right direction.

The lawn mower may be configured to comprise a lawn mowing reel as a rotary tool for mowing the lawn, which has a spiral blade, for example, arranged on a cylinder with a rotation axis parallel to the ground surface, functions to pinch and mow the lawn, etc., and is driven by a deck motor.

The left and right operation levers 34 and 36 are provided on respective sides of the driver's seat 17 to be able to pivot around a horizontal axis along the right-and-left direction and swing toward the front-and-rear direction. When each of the operation levers 34, 36 is in a normally upright state, the motor 70 for traveling stops rotating. When each of the operation levers is operated to swing, instructions are issued such that a direction and speed of rotation of the motor 70 on the corresponding side are to be changed according to a direction and amount of swinging.

The swinging position of the operation levers 34, 36 in the front-and-rear direction is detected with a lever sensor (not shown). The detected signal of the lever sensor is input to a control unit (not shown) installed in the vehicle as a signal indicating a rotation instruction of the motor 70 for traveling, and the control unit causes the motor 70 to rotate in a direction following the instruction. Driving power of the motor 70 is transmitted to the left and right rear wheels 24 through a gear mechanism 80 of the power transmission units 41a, 71a (see FIGS. 2A and 6) described below. This allows the vehicle to travel in the front-and-rear direction depending on the operation of the operation levers 34, 36. In addition, a difference in a rotation speed between the left and right rear wheels 24 is caused by varying an amount of a swinging operation between the left and right operation levers 34, 36, so that the vehicle can turn. Furthermore, by tilting one and the other of the two operation levers 34, 36 to the front side and the rear side, respectively, the left and right rear wheels 24 rotate in opposite directions, so that the turning radius decreases to cause the vehicle to turn quickly.

Furthermore, the two operation levers 34, 36 are configured to be able to tilt from the normal upright state toward the outside of the vehicle in the vehicle-width direction so that the tilted position becomes a parking brake position. The two operation levers 34, 36 can instruct activation of the parking brake by being moved to the parking brake position. The upper side of the vehicle is provided with a T-shaped guide hole 29 to guide the movement of the operation levers 34, 36, so that the two operation levers 34, 36 can respectively be only tilted from the upright state thereof toward the outside of the vehicle in the vehicle-width direction. The lower end portions of the operation levers 34, 36 and a brake device 90 (described below) of the power transmission units 41a, 71a are coupled with a linkage mechanism, so that when the operation levers 34, 36 are tilted toward the outside of the vehicle, the brake device 90 can be activated to brake a corresponding wheel 24.

The general configuration of the lawn mowing vehicle 10 is described above. Next, the power transmission unit 41a (see FIG. 2A) mounted on the lawn mowing vehicle 10 is described below. The right power transmission unit 41a is connected to the right rear wheel 24, and the left power transmission unit 71a (Fig. 6) is connected to the left rear wheel. In the following, although the structure of the right power transmission unit 41a is mainly described, the structure of the right power transmission unit 41a and the structure of the left power transmission unit 71a are symmetrical with respect to the center line of the body orthogonal to the right-and-left direction.

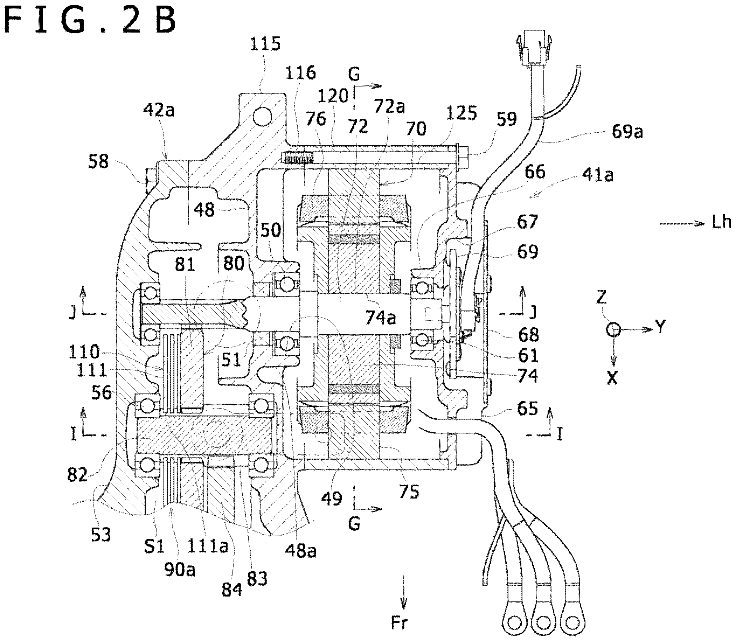

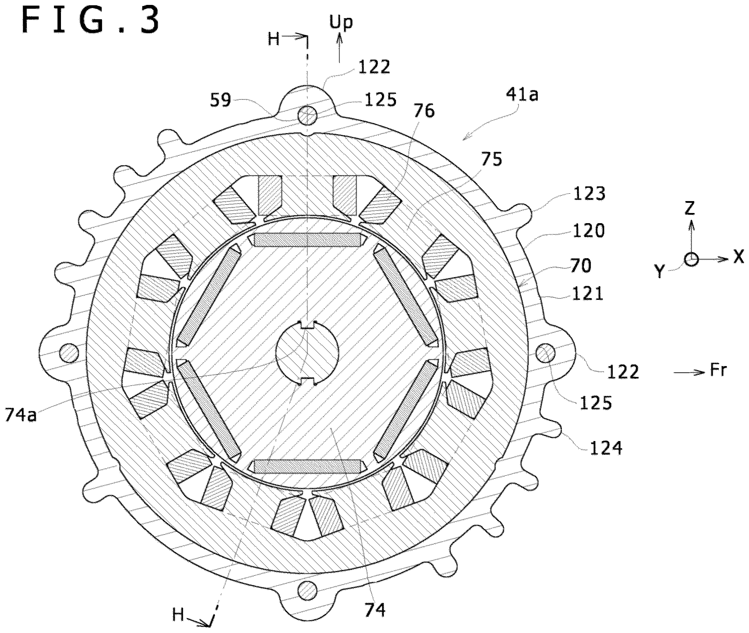

FIG. 2A is a cross sectional view of the power transmission unit 41a for the right rear wheel 24, which is taken along a plane orthogonal to the vertical direction. FIG. 2B is a partially enlarged diagram illustrating a rear part of FIG. 3A. FIG. 3 is a cross sectional view taken along line G-G of FIG. 2B. FIGS. 2A and 2B correspond to cross sectional views taken along line H-H of FIG. 3. The power transmission unit 41a includes a transmission case 42a (see FIG. 2A and 2B), a motor case 120, an output shaft 60, the motor 70 for traveling, and the gear mechanism 80, which are integrally combined to form the power transmission unit 41a.

The transmission case 42a encloses an input shaft 72, the output shaft 60, and the gear mechanism 80. The gear mechanism 80 transmits driving power from the input shaft 72 to the output shaft 60 while reducing speed. The input shaft 72 and the output shaft 60 are arranged in parallel. The input shaft 72 is also a motor shaft of the motor 70 described below. Namely, the input shaft 72 functions as the motor shaft. The transmission case 42a is integrated by connecting with a plurality of bolts 58 a first case 115 forming an inner side (left side) in the vehicle-width direction of one side in an axial direction thereof and a second case 53 forming an outer side (right side) in the vehicle-width direction of the other side in the axial direction thereof. Here, the axial direction of the power transmission unit 41a indicates a direction parallel to the input shaft 72 and output shaft 60, and aligns with the vehicle-width direction.

The first case 115 has a gear case part 46 having an opening which extends toward the outside thereof in the vehicle-width direction, and an intermediate wall 48 to partition between the motor 70 side and the gear mechanism 80 side at a position in the middle of a rear portion thereof in the axial direction.

The intermediate wall 48 has a boss part 48a as a cylindrical portion extending in the axial direction, inside which there is provided a hole 49 through which the input shaft 72 as the rotor shaft of the motor 70 passes. A bearing 50 and a seal 51 which protects a gear chamber from invasion of a circulating oil into the motor chamber are fixed on the inner circumferential surface of the hole 49. The input shaft 72 is rotatably supported by the bearing 50 on the inner circumferential surface of the hole 49. The boss part 48a corresponds to a support to secure the bearing 50 which supports the input shaft 72.

An input shaft gear part 73, with which an intermediate gear 81 of the gear mechanism 80 meshes, is directly formed on the gear mechanism 80 side of the input shaft 72.

The second case 53 has a cylinder part 54 extending along the axial direction toward the outside in the vehicle-width direction, inside which an opening extends in the vehicle-width direction. The output shaft 60 passes through the cylinder part 54. The transmission case 42a is formed by connecting the first case 115 and the second case 53 so that the outer peripheries of both cases are abutted to each other in the vehicle-width direction. A gear chamber S1 is formed inside the transmission case 42a.

There are arranged in the gear chamber S1 a gear mechanism 80 side portion of the input shaft 72, the gear mechanism 80, and the output shaft 60. An outer end portion of the output shaft 60 in the vehicle-width direction protrudes from the tip of the cylinder part 54, and a hub 62 is fixed to the protruding outer end portion. The right rear wheel 24 is fixed to the hub 62.

The gear mechanism 80 includes the input shaft gear part 73 formed on the input shaft 72, an intermediate shaft 82, which is located between the input shaft 72 and the output shaft 60 and whose outer circumferential surface fixes the intermediate gear 81, and an output gear 84 fixed to the output shaft 60, so that the intermediate gear 81 meshes with the input shaft gear part 73 and the output gear 84 meshes with an intermediate shaft gear part 83 formed directly on the outer circumferential surface of the intermediate shaft 82. The number of teeth of the output gear 84 is greater than that of the intermediate shaft gear part 83, and the number of teeth of the intermediate gear 81 is greater than that of the input shaft gear part 73. This allows the rotation speed of the input shaft 72 to be reduced by the gear mechanism 80 and transmitted to the output shaft 60. Therefore, the gear mechanism 80 can transmit driving power from the input shaft 72 to the output shaft 60 with the rotation speed of the input shaft being reduced.

The input shaft 72, the intermediate shaft 82, and the output shaft 60 are rotatably supported by a plurality of bearings 50, 55, 56, and 57 provided in the transmission case 42a, respectively.

In addition, a brake rotor 110, which constitutes the brake device 90 as described below, is mounted on the intermediate shaft 82 so as to be nonrotatable. By pressing the brake rotor 110 with a brake shoe 93 (see FIG. 6) and a brake pad 94 (see FIG. 6) from both sides in the axial direction, braking torque is applied to the brake rotor 110 to stop the intermediate shaft 82 from rotating. The brake shoe 93 and the brake pad 94 together correspond to a pressing part.

The first case 115 and the second case 53 of the transmission case 42a may be made of metal such as iron, aluminum alloy, or the like. By making each of cases 115, 53 of aluminum alloy, it is possible to make the transmission case 42a lightweight. The gear chamber S1 of the transmission case 42a is capable of encapsulating oil to lubricate the gear mechanism 80.

An outer periphery of the motor case 120 is abutted and fixed to an inner periphery of the first case 115 of the transmission case 42a in the vehicle-width direction. The motor case 120 has a cylindrical shape whose cross-section is constant throughout a direction orthogonal to the axial direction, and the motor 70 for traveling is placed on the inside thereof. Specifically, as shown in Fig. 3, the motor case 120 has a cylinder part 121, connecting ribs 122 with a semi-circular cross section, which protrude from a plurality of circumferential positions of the cylinder part 121 and extend in the axial direction, and reinforcing ribs 123, 124, which protrude from a plurality of circumferential positions of the cylinder part 121 and extend in the axial direction, with width along the circumference smaller than width along the circumference of the connecting ribs 122. The connecting ribs 122 and reinforcing ribs 123, 124 are formed over the entire axial length of the motor case 120 in the axial direction. Circular bolt holes 125, into which bolts 59 are inserted, are formed at a plurality of positions along the circumference of the motor case 120 so as to pass through the connecting ribs 122 while a portion of each of the holes enters into the cylinder part 121.

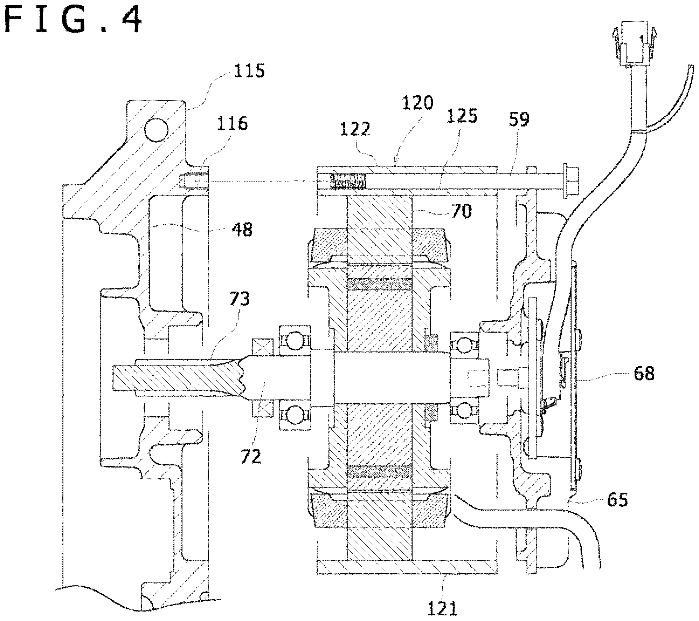

FIG. 4 is an exploded cross sectional view just before assembly into the state shown in FIG. 2B. Threaded holes 116 are formed at a plurality of positions on the end surface of the first case 115 facing the motor case 120, which align with the respective bolt holes 125 of the motor case 120. The first case 115 is fixed to the motor case 120 and a cover 65 by screwing the threaded parts of the bolts 59, which pass through the cover 65 and the bolt holes 125, with the threaded holes 116. The motor case 120 may be made of a metal or alloy whose main component is aluminum or copper. This allows the motor case 120 to have higher thermal conductivity. Furthermore, when the motor case 120 is made of a metal or alloy whose main component is aluminum, the motor case 120 can be made lightweight. The motor case 120 may be made of other metals such as iron or the like. When the motor case 120 is made of metal, the motor case 120 is formed by extrusion molding or pultrusion molding.

Since the motor case 120 has a cylindrical shape whose cross-section is constant throughout a direction orthogonal to the axial direction, the motor case 120 can be formed by extrusion molding or pultrusion molding with high productivity. This allows a reduction in the manufacturing cost of the motor case 120. Furthermore, when the motor case 120 is made of metal with high thermal conductivity, since a larger heat dissipation member allows the heat of the motor 70 located inside the motor case to be efficiently transferred from the motor case 120 to the transmission case 42, the cooling performance of the motor 70 can be improved. Furthermore, since a structure in which the motor 70 is assembled inside the motor case 120 can be used as a subassembly, it is possible to facilitate assembly work when manufacturing the power transmission unit 41a.

The motor case 120 may be made of resin. Also in this case, since the motor case 120 has a cylindrical shape whose cross-section is constant throughout a direction orthogonal to the axial direction as well as the shape is simple, a manufacturing die for the motor case 120 can be formed easily. This allows a reduction in the manufacturing cost of the motor case 120.

As shown in FIGS. 2B and 3, the motor 70 is a three-phase permanent magnet motor, for example. The motor 70 includes a rotor 74 fixed on an outer circumferential surface of the input shaft 72 inside the motor case 120, a stator core 75 facing an outer circumferential surface of the rotor 74, and a three-phase wound stator coil 76 arranged on the stator core 75. The rotor 74 has permanent magnets arranged at a plurality of positions along a circumference of the rotor core, for example. The stator core 75 is fixed to the inside of the motor case 120. By supplying three-phase AC power to the stator coil 76, which is converted from DC power from the battery, the interaction between a rotating magnetic field generated in the stator core 75 and the magnetic field generated by the motor rotor 74 causes the input shaft 72 of a motor shaft to rotate.

Since the motor case 120 has a cylindrical shape whose cross-section is constant throughout a direction orthogonal to the axial direction, when assembling the stator core 75 inside the motor case 120, an axial position to be fixed of the stator core 75 can be determined by using a jig (not shown) with an outer diameter slightly smaller than an outer diameter of the stator core 75 and a predetermined thickness in the axial direction. Namely, the stator core 75 is overlaid and press-fitted into the motor case 120 with the jig, so that the stator core 75 can be positioned and fixed inside the motor case 120 by the thickness of the jig.

The cover 65, which closes an opening at an inner end in the vehicle-width direction of an axially inner end of the motor case 120, is fixed to the motor case 120 by a plurality of bolts (not shown). The cover 65 may be made of metal such as iron, aluminum alloy, or the like. A cylindrical portion 66 extending in the axial direction is formed on the axially inner side of the cover 65, and a bearing 61 rotatably supporting the axially inner end of the input shaft 72 is fixed inside the cylindrical portion 66. A recess 67 is formed on the outer side of the cover 65 in the vehicle width direction, and a cap 68, which is made by resin or metal, etc. and has a plate-like shape, is fixed to a periphery of an opening end of the recess 67. This allows the recess 67 to be protected from a foreign-matter intrusion from the outside.

A rotation speed detecting device 69 is provided in the recess 67 to detect the rotation speed of the input shaft 72. In place of the rotation speed detecting device 69, an angle detecting device may be provided to detect the rotation angle of the input shaft 72. A detected signal of the rotation speed detecting device 69 or the angle detecting device is output to the control unit via a cable 69a. The detected signal from the rotation speed detecting device 69 is used by the control unit to control the output of the motor 70, etc. When the detected signal from the angle detecting device is output to the control unit, the control unit calculates the rotation speed of the input shaft 72 based on the detected signal. The rotation speed detecting device 69 and the angle detecting device include a resolver, for example.

In the following, the input shaft 72 is described in more detail. The input shaft 72 has a structure in which the motor shaft and the input shaft of the gear mechanism 80 are integrated. As shown in FIGS. 2B and 3, a key protrusion 74a is formed on the inner circumferential surface of the rotor 74, and a key groove 72a is formed on the outer circumferential surface of the input shaft 72 on the side of the motor 70. By engaging the key protrusion 74a to the key groove 72a, rotation of the rotor 74 relative to the input shaft 72 is prevented. The input shaft gear part 73 is formed directly on the outer circumferential surface on the gear mechanism 80 side of the input shaft 72.

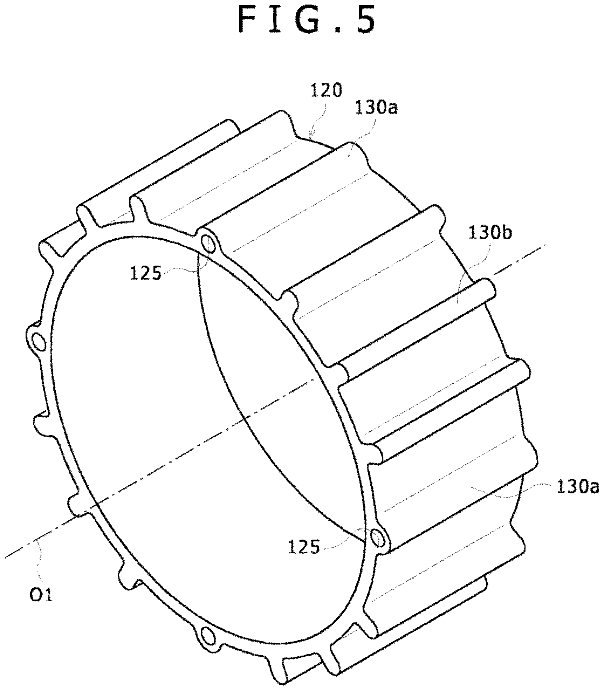

FIG. 5 is a perspective view illustrating an example of the motor case 120 according to the embodiment. As shown in Fig. 5, the motor case 120 has a plurality of ribs 130a, 130b protruding at a plurality of positions along the circumference on the outer circumferential surface, for example. The ribs 130a and 130b are provided over the entire axial length of the motor case 120 in the axial direction, and the cross-sectional shape of each of the ribs 130a and 130b in a direction orthogonal to the axial direction is constant over the entire axial length. Some of the plurality of ribs 130a among the plurality of ribs 130a and 130b have the bolt holes 125 through which the bolts 59 (see FIG. 2A) pass. The plurality of bolt holes 125 are formed in parallel with the central axis O1 of the motor case at a plurality of positions along the circumference of the motor case 120.

FIG. 6 is a partially enlarged cross sectional view of the two rear wheels 24 corresponding to a cross sectional view taken along line I-I of FIG. 2B. FIG. 7 is a perspective view with some parts omitted illustrating the power transmission unit 41a for the right rear wheel 24 of the vehicle 10 according to the embodiment. A braking force generator 92 applies braking force to the brake rotor 110. The braking force generator 92 includes a cam shaft 96 located upside the first case 115 along the vertical direction, the brake shoe 93, the brake pad 94, and a brake arm 95.

Specifically, a multi-disc brake rotor 110 fits with the intermediate shaft 82 constituting the gear mechanism 80 in such a manner that relative rotation is impossible. A brake device 90a includes the brake rotor 110 and the braking force generator 92. More specifically, as shown in FIGS. 2A, 2B, and 6, a female spline part 111a formed in the central hole of a plurality of rotor plates 111 which form the brake rotor 110 meshes with the intermediate shaft gear part 83 formed directly on the outer circumferential surface of the intermediate shaft 82 in such a manner that relative rotation is impossible. The rotor plate 111 is capable of axially sliding slightly relative to the intermediate shaft gear part 83. This allows the brake rotor 110 to be mounted on the intermediate shaft 82 in such a manner that relative rotation is impossible. A fixed side plate 112, which is supported by the transmission case 42a in such a manner as to be movable in the axial direction, is located between the plurality of rotor plates 111. For the sake of simplicity, Fig, 7 shows only one rotor plate 111 and one fixed side plate 112.

On the other hand, the cam shaft 96, which constitutes the braking force generator 92, extends in the vertical direction and is rotatably supported by the transmission case 42a, and the upper portion thereof protrudes from the top of the transmission case 42a. Accordingly, a through hole 115a, through which the cam shaft 96 passes, is formed at the upper end portion above the intermediate shaft 82 of the first case 115 in the vertical direction. The upper portion of the through hole 115a has a larger diameter than the lower portion, and two O-rings 98 are provided inside thereof to seal between the through hole 115a and the outer circumferential surface of the cam shaft 96. It may be the case that only one O-ring 98 is provided. On the other hand, in the gear chamber S1, a portion with semi-circular cross section functioning as a cam surface 97 is formed on the lower side of the cam shaft 96. The cam surface 97 faces the brake shoe 93 which is movable in the axial direction of the transmission case 42a. The brake shoe 93 is located between the cam shaft 96 and the brake rotor 110.

The brake pads 94 are attached on an inner wall of the transmission case 42a. The brake rotor 110 is located between the brake shoes 93 and the brake pads 94. When the cam surface 97 is positioned in parallel to the brake shoes 93, the brake shoes 93 move away from the brake rotor 110 to be in a non-braking state. On the other hand, when the cam shaft 96 rotates so that the cam surface 97 inclines with respect to the brake shoes 93, the cam surface 97 is pressed against the brake shoes 93. As a result, since the brake rotor 110 is sandwiched between the brake pads 94 and brake shoes 93, the brake rotor 110 and thus the wheel 24 to which power is transmitted from the input shaft 72 are braked.

The brake arm 95 is a long member attached and fixed to the upper end portion of the cam shaft 96 in a direction orthogonal to the cam shaft 96. A tip of the brake arm 95 is coupled to the lower end portions of the operation levers 34, 36 (see FIG. 1) via a link mechanism (not shown). A spring 99 is disposed between the outer circumferential surface of the transmission case 42a enclosing the cam shaft 96 and the brake arm 95 in the vertical direction. A first engagement pin 100 which is fixed to the brake arm 95 and protrudes downward and a second engagement pin 101 which is fixed to the transmission case 42a and protrudes upward engage with respective ends of the spring 99. This forces the cam shaft 96 to rotate toward a first rotation direction from the spring 99 via the brake arm 95 so that the cam surface 97 becomes parallel to the brake shoes 93 to be in a non-braking state. On the other hand, when operating the operation levers 34, 36 to assume the parking brake position, the tip of the brake arm 95 moves against spring bias of the spring 99. This forces the cam shaft 96 to rotate toward a second rotation direction so that the cam surface 97 inclines relative to the brake shoes 93 to press the brake shoes 93 against the brake rotor 110. The second rotation direction is opposed to the first rotation direction. As a result, the brake device 90a comes into the braking state where the rotation of the brake rotor 110 and the wheel 24 stop, and this state is maintained. The brake rotor may be configured to be mounted on the gear mechanism side of the input shaft instead of the intermediate shaft. In this case, the brake shoes and brake pads press the brake rotor from both sides in the axial direction to stop the input shaft from rotating and brake the wheels.

With respect to the input shaft 72 of the first case 115, a lower through hole 115b is formed at the lower end portion which is the opposite side to the upper through hole 115a through which the cam shaft 96 passes. The lower through hole 115b is plugged with a plug 102. The two through holes 115a and 115b are identical in shape. When the vertical direction of the transmission case 42a is reversed, the lower through hole 115b in FIG. 6 becomes the upper through hole to pass through the cam shaft 96, and the upper through hole 115a in FIG. 6 becomes the lower through hole to be plugged with the plug 102.

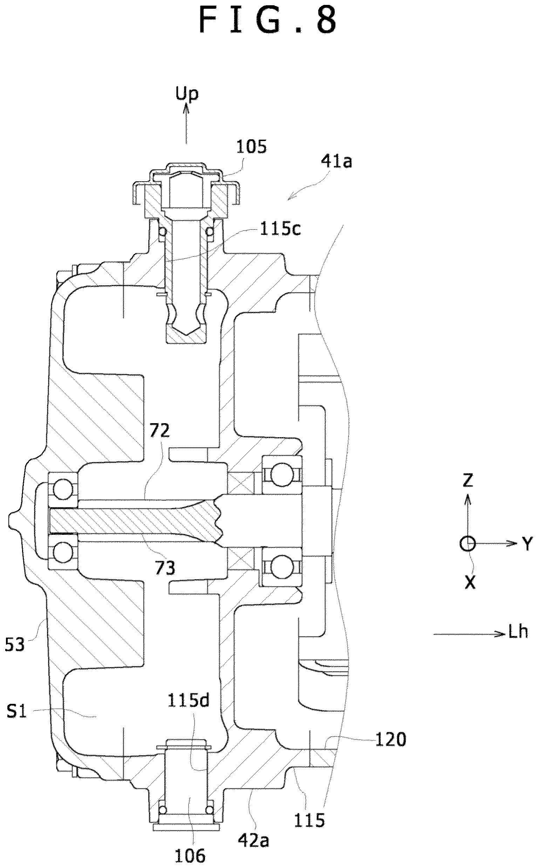

FIG. 8 is a cross sectional view taken along line J-J of FIG. 2B. In the first case 115 of the transmission case 42a, two through holes 115c and 115d, which pass through the first case in the vertical direction, are formed on the upper and lower side of the input shaft 72, respectively. An air breather device 105 is installed through the upper through hole 115c. The air breather device 105 is provided to prevent entry of liquids such as water, dust, etc. thereinto from the upper side and to allow air inside the gear chamber S1 to be sucked in and out of the transmission case 42a. When the internal pressure of the gear chamber S1 rises, air is discharged outside the transmission case 42a through the air breather device 105 to prevent an excessive rise in internal pressure. The lower through hole 115d is plugged with a plug 106. The two through holes 115c and 115d are identical in shape. When the vertical direction of the transmission case 42a is reversed, the lower through hole 115d in FIG. 8 becomes the upper through hole to attach the air breather device 105, and the upper through hole 115c in FIG. 8 becomes the lower through hole to be plugged with the plug 106.

According to the above-mentioned power transmission units 41a, 71a, the motor case 120, which is attached to the transmission case 42a on the side opposite to the gear mechanism 80 side of the transmission case 42a, has a cylindrical shape whose cross-section is constant throughout a direction orthogonal to the axial direction, and the motor 70 is placed inside the same. This allows a reduction in manufacturing cost of a power transmission unit 41a, 71a in which the motor case 120 is fixed to the transmission case 42a.

Furthermore, the input shaft 72 is a motor shaft, in which the rotor 74 is fixed on the outer circumferential surface thereof. The input shaft gear part 73, with which the intermediate gear 81 of the gear mechanism 80 meshes, is formed directly on the gear mechanism 80 side of the input shaft 72. This makes it possible to shorten the length of the power transmission units 41a, 71a in the axial direction, since it is not necessary to connect the motor shaft and the input shaft as two different members through a joint with each other. Furthermore, differently from the case where the motor shaft and input shaft are two different members, it is possible to reduce the manufacturing cost by decreasing not only the number of parts but also the number of man-hours required to assemble the parts. Furthermore, since the input shaft gear part 73 of the input shaft 72 can be made smaller in diameter, the power transmission units 41a, 71a can be made smaller as a whole.

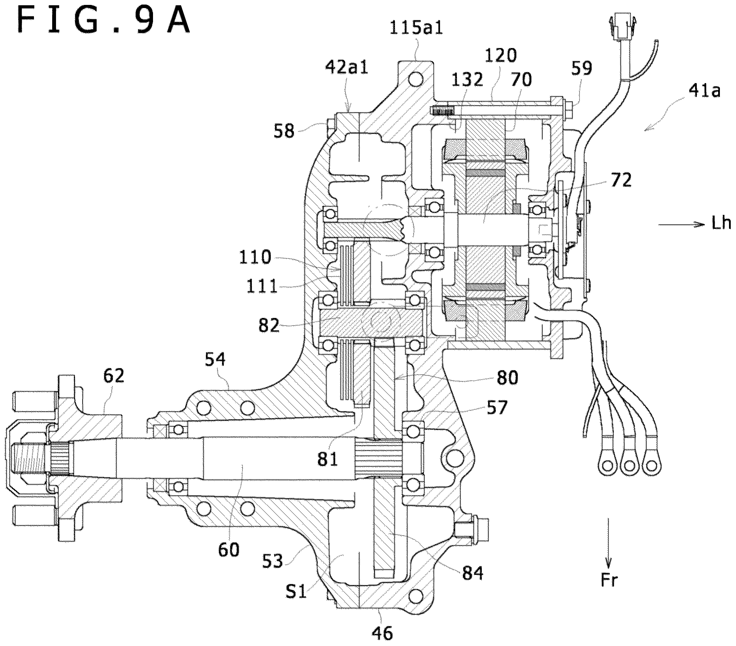

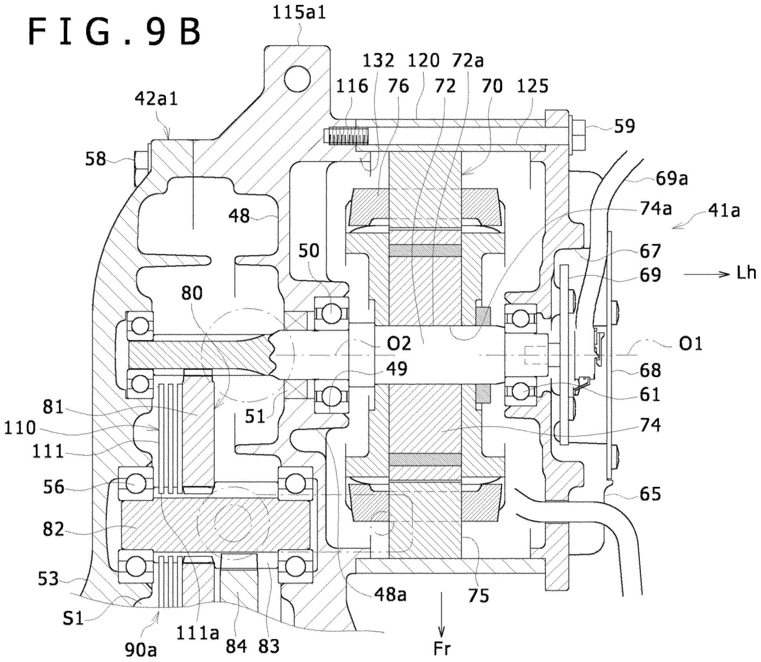

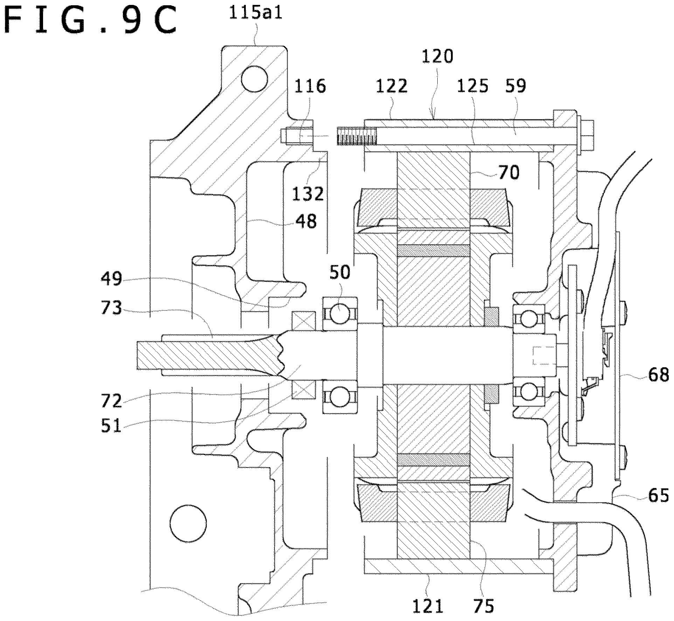

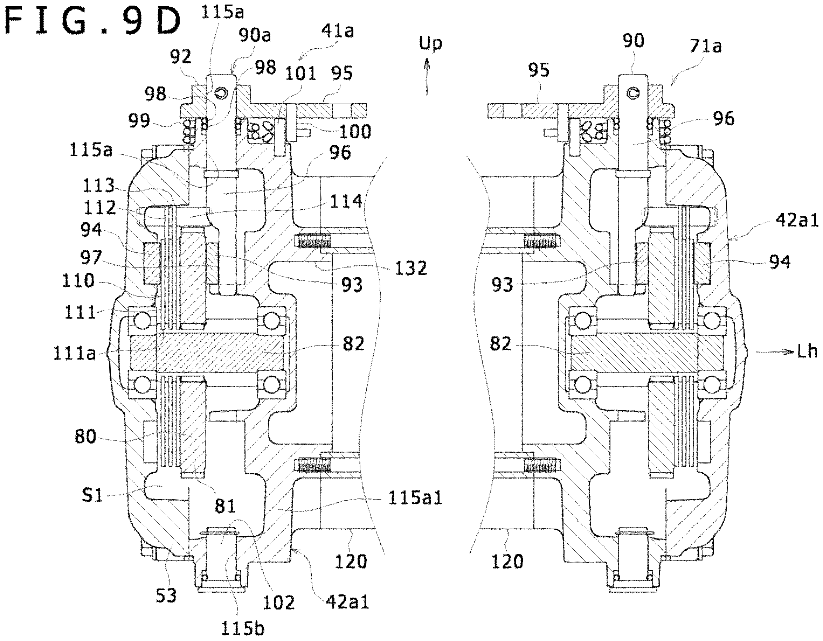

FIG. 9A is a diagram illustrating another example having a different transmission case from the embodiment shown in FIG. 2A. FIG. 9B is a partially enlarged diagram illustrating a rear part of FIG. 9A. FIG. 9C is a diagram illustrating another example having a different transmission case from the embodiment shown in FIG. 4. FIG. 9D is a diagram illustrating another example having a different transmission case from the embodiment shown in FIG. 6.

Another example of a transmission case 42a1 is configured so that the second case 53 is connected to a first case 115a1 by bolts 58. A cylinder 132 with a cylindrical shape, which protrudes from an axial end surface of the first case 115a1 toward the motor case 120, is formed on the axial end surface on the boss part 48a side having the hole 49, and in which it is overlaid with the motor case 120. The end portion of the transmission case 42a1 side of the motor case 120 is fitted to the outside of the outer circumferential surface of the cylinder 132 without rattling. The cylinder 132 is a centering structure to align a central axis O2 of the hole 49 in the transmission case 42a1 with a central axis O1 of the inner circumferential surface in the motor case 120, to which the stator core 75 is fixed.

This allows more precise alignment of the central axis O1 of the inner surface of the motor case 120 and the center axis O2 of the hole 49 formed in the transmission case 42a1, through which the input shaft 72 as the motor shaft of the motor 70 passes. As a result, since the assembly work of the motor case 120 to the transmission case 42a1 is facilitated, the manufacturing cost of the power transmission unit 41a can be reduced. In addition, since central axes of the motor rotor 74 and the stator core 75 of the motor 70 can be aligned more precisely, a rotational fluctuation of the motor 70 can be suppressed, thereby suppressing an increase of vibration and noise.

In the configuration shown in FIGS. 9A through 9D, the shape of the cylinder 132 formed in the first case 115a1 is not limited to the cylinder. For example, it is possible to configure such that top surfaces of three or more protrusions formed on the outer circumferential surface of the cylinder part along the outer circumference can fit to the inner circumferential surface of the motor case 120.

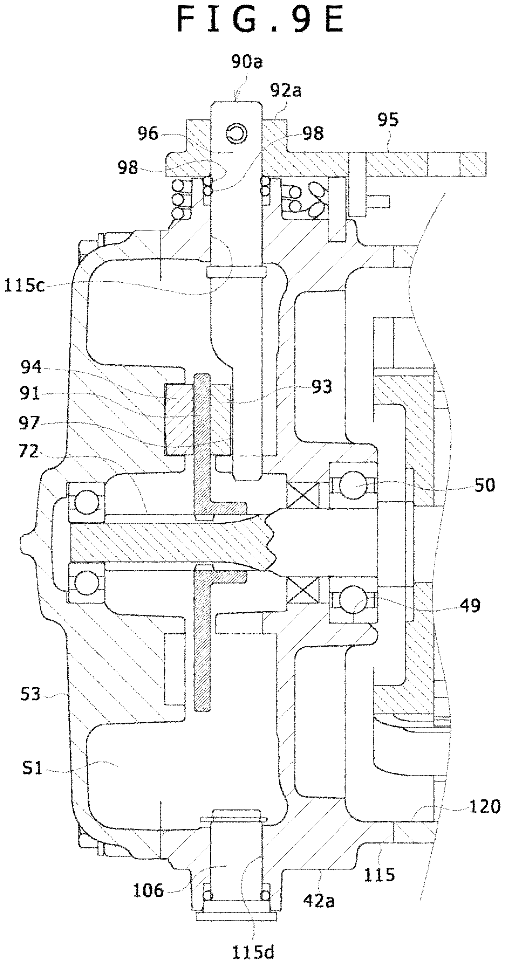

FIG. 9E is a diagram illustrating another example that is different from the embodiment shown in FIG. 8, in that the brake rotor 110 is not mounted on an intermediate shaft 82 (see FIGS. 2A and 6) but only one brake rotor 91 is mounted on the input shaft 72. In the first case 115 of the transmission case 42a, the cam shaft 96 of the brake device 90a passes through the through hole 115c, which is formed on the upper side of the input shaft 72 to pass through the first case in the vertical direction. The brake arm 95 is fixed to the upper end portion of the cam shaft 96, similarly to the configuration shown in FIG. 6.

On the other hand, a brake rotor 91 for the input shaft 72, which constitutes the brake device 90, is mounted on the input shaft gear part 73 formed in a portion disposed in the transmission case 42a so as to be nonrotatable. By pressing the brake rotor 91 with the brake shoe 93 and the brake pad 94 from respective sides in the axial direction, braking torque is applied to the brake rotor to stop the input shaft 72 from rotating. The brake shoe 93 and the brake pad 94 together form the pressing part.

Furthermore, the intermediate gear 81 (see FIG. 2A) fixed to the intermediate shaft 82 meshes with the input shaft gear part 73 at a different position from the brake rotor 91 in the axial direction. A braking force generator 92a is constituted to include the cam shaft 96, the brake shoes 93, the brake pads 94, and the brake arm 95. The configuration of the braking force generator 92a is similar to that of the braking force generator 92 shown in FIG. 6 except for parts arrangement position. In the configuration shown in FIG. 9E, the through hole 115a (see FIG. 6), through which the cam shaft passes, is not formed at the upper end portion above the intermediate shaft 82 of the transmission case 42a in the vertical direction, or, even when the though hole 115a is formed, it is plugged with the plug.

In the configuration shown in Fig. 9E, since the brake rotor 91 is fixed to the input shaft 72 which has the highest rotation speed of the gear mechanism 80, it is possible to decrease braking torque to be applied to the brake rotor 91 from the pressing part. This allows a reduction in brake capacity, so that the operating force to activate the brake device 90a can be lowered. As a result, a load that the driver has to exert to operate the brake device 90a with the operation levers 34, 36, etc. can be reduced. In the configuration in which the brake device is activated by an electric actuator, it is possible to make the electric actuator smaller.

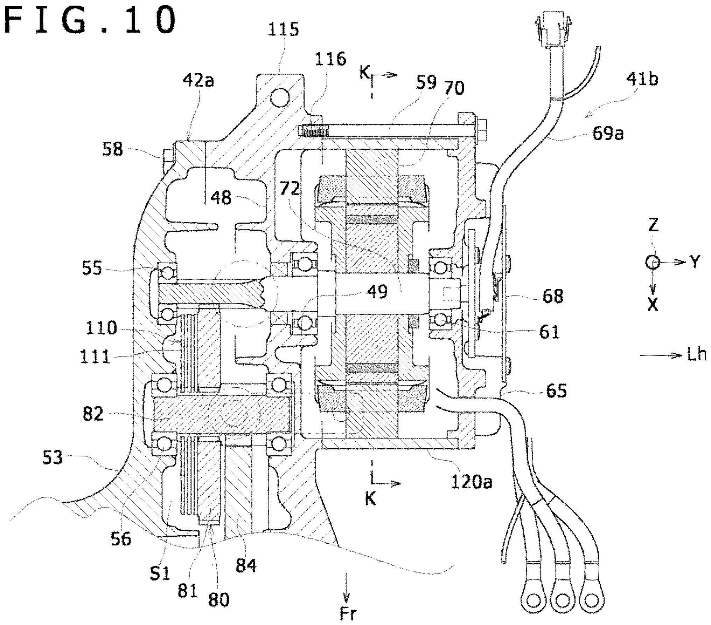

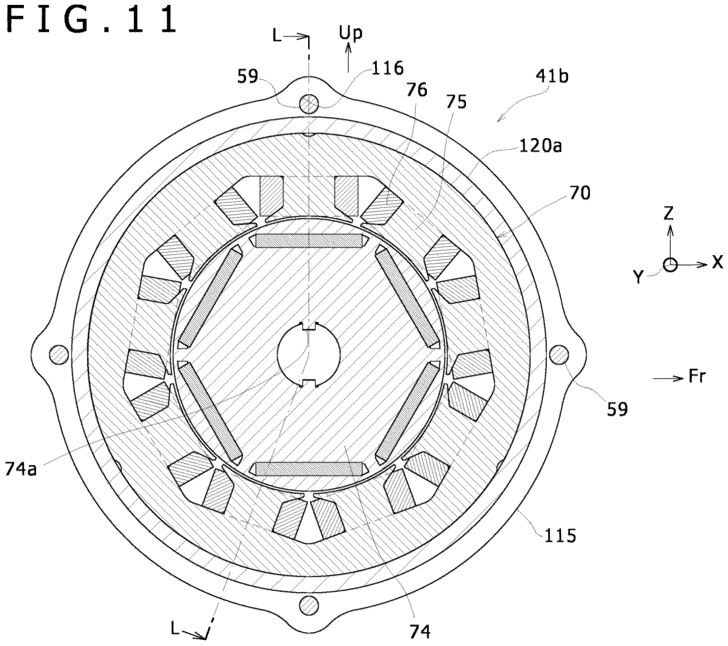

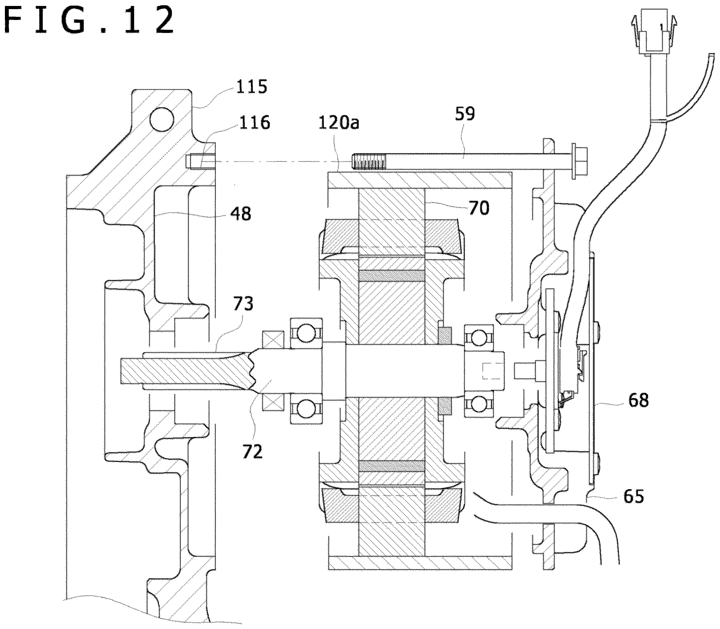

FIGS. 10 through 12 show another example of a power transmission unit 41b different from the embodiment mentioned above. FIG. 10 is a diagram illustrating another example of the power transmission unit 41b different from the embodiment shown in FIG. 2B. FIG. 11 is a cross sectional view taken along line K-K of FIG. 10. FIG. 10 corresponds to a cross sectional view taken along line L-L in FIG. 11. FIG. 12 is an exploded cross sectional view with some parts omitted just before assembly into the state shown in FIG. 10. In this example configuration, differently from the configurations shown in FIGS. 1 through 9E, a motor case 120a has a simple cylindrical shape without ribs or reinforcing ribs on the outer circumferential surface. Thereby, as shown in FIG. 12, while the motor case 120a is sandwiched between the first case 115 and the cover 65 to which the cap 68 is fixed, by connecting the bolts 59 which pass through the cover 65 and a space outside the outer circumferential surface of the motor case 120a to the threaded holes 116 of the first case 115, the first case 115, the motor case 120a, the cover 65, and the cap 68 are fixed together.

In this example, since the shape of the motor case 120a is much simpler than in the configuration shown in FIGS. 1 through 9E, this makes it possible to simplify a manufacturing of the extrusion molding die, and thus the manufacturing cost of the motor case 120 can be further reduced. The other configurations and actions of this example are the same as those of the embodiment shown in FIGS. 1 through 4 and FIGS. 6 through 8.

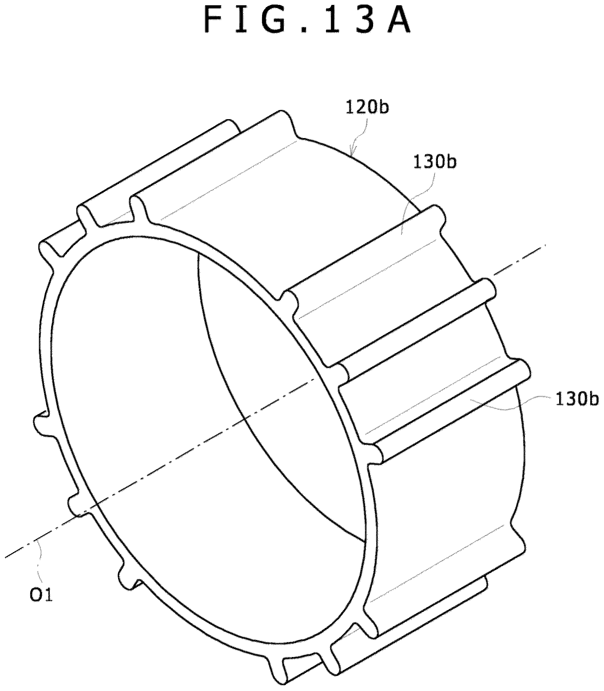

FIG. 13A is a perspective view illustrating another example of the motor case different from the embodiment mentioned above. In the configuration of this example, although the ribs 130b are formed at a plurality of positions on the outer circumferential surface of the motor case 120b along the outer circumference throughout the axial direction, no ribs with bolt holes, through which the bolts 59 (see FIGS. 2A and 2B) to connect the motor case 120b to the transmission case pass through, are formed. In the configuration of this example, similarly to the configuration shown in FIGS. 10 through 12, while the motor case 120b is sandwiched between the first case 115 and the cover 65 to which the cap 68 is fixed, by connecting the bolts 59 which pass through the cover 65 and a space outside the outer circumferential surface of the motor case 120b to the threaded holes 116 of the first case 115, the first case 115, the motor case 120b, the cover 65, and the cap 68 are fixed together. The other configurations and actions of this example are the same as those of the embodiment shown in FIGS. 1 through 4, FIGS. 6 through 8, or FIG. 5.

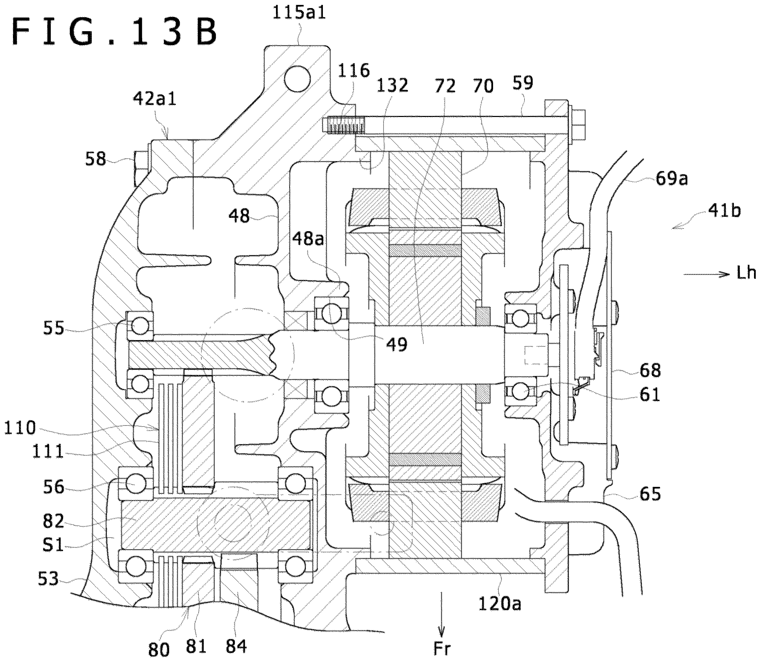

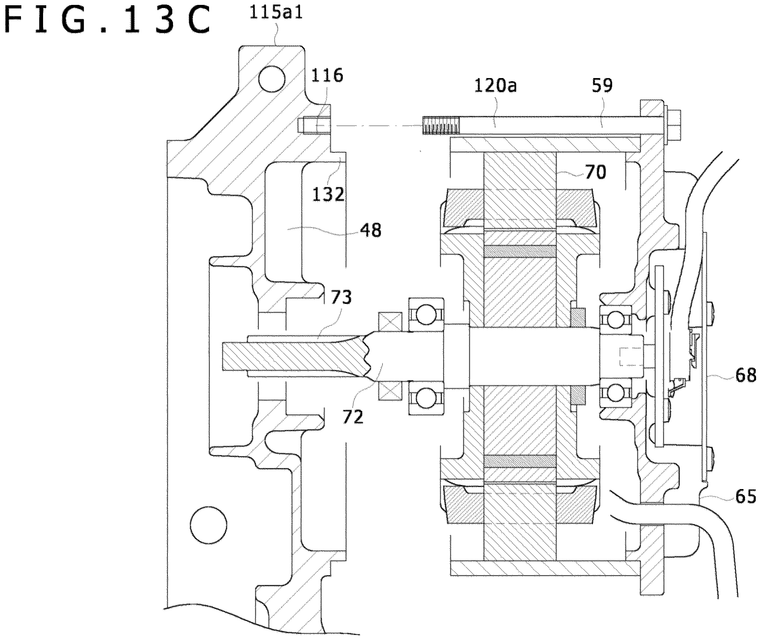

FIG. 13B is a diagram illustrating another example having a transmission case different from the embodiment shown in FIG. 10. FIG. 13C is a diagram illustrating another example having the transmission case different from the embodiment shown in FIG. 12. In the configuration of this example, differently from the configuration shown in FIGS. 10 through 12, the cylinder 132 with a cylindrical shape, which protrudes from an axial end surface of the first case 115a1 comprising the transmission case 42a1 toward the motor case 120a, is formed on the axial end surface on the boss part 48a side having the hole 49, and in which it is overlaid with the motor case 120a. The other configurations and actions of this example are the same as those of the embodiment shown in FIGS. 10 through 12, or FIGS. 9A through 9D.

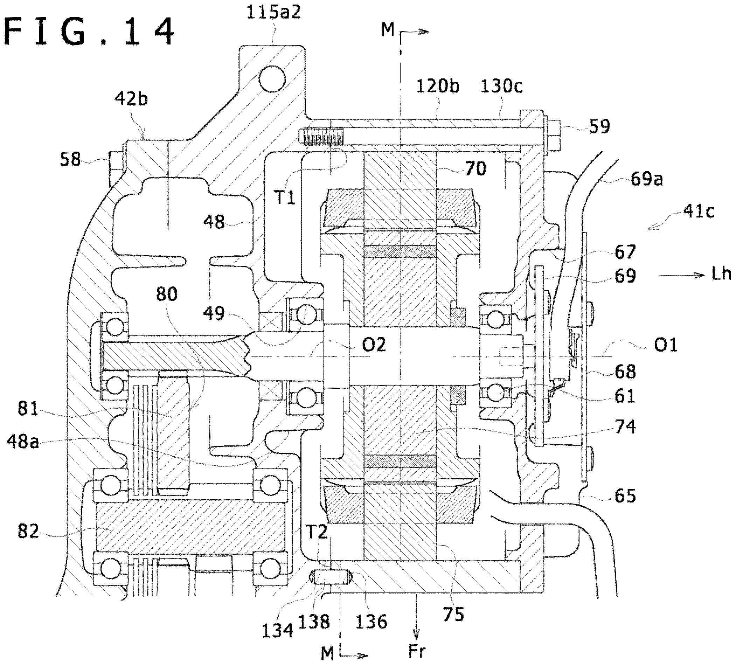

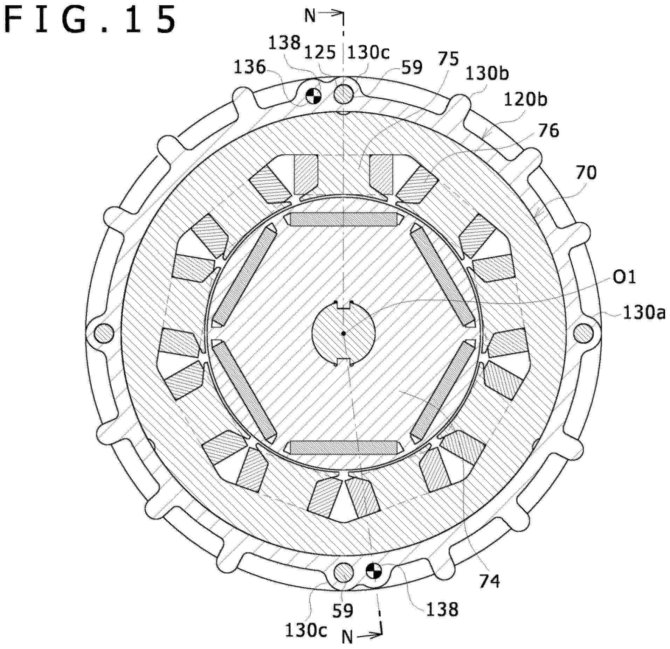

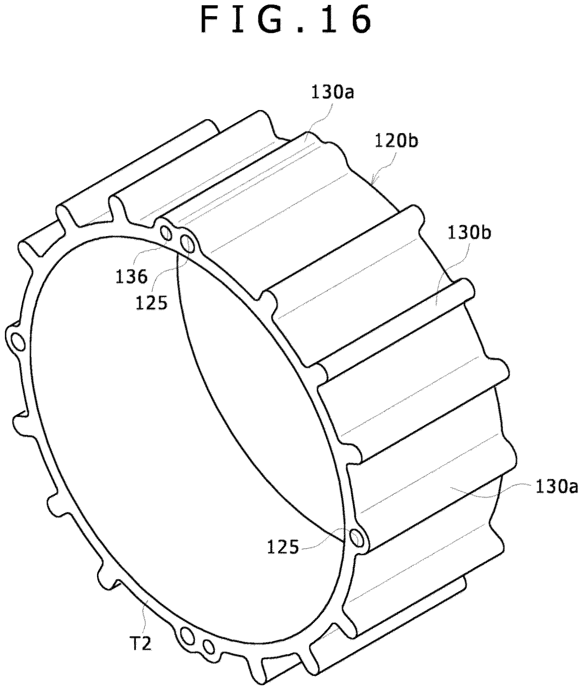

FIG. 14 is a diagram illustrating another example of a power transmission unit 41c different from the embodiment shown in FIG. 2B. FIG. 15 is a cross sectional view taken along line M-M of FIG. 14. FIG. 16 is a perspective view of the motor case 120b removed from FIG. 14. In the configuration of this example, the centering structure to align the central axis O2 of the hole 49 in a transmission case 42b with the central axis O1 of the inner circumferential surface in the motor case 120b, to which the stator core 75 of the motor 70 is fixed, are formed in both the transmission case 42b and the motor case 120b. In this example, the centering structure is configure to include a plurality of first holes 134 formed on a first end surface T1 which is the end surface of a first case 115a2 comprising a transmission case 42b, which faces and is overlaid with the end surface of the motor case 120b, a plurality of second holes 136 formed on a second end surface T2 which is the end surface of a motor case 120b and overlaid with the first end surface T1, and a plurality of pins 138 simultaneously fitted into both the plurality of first holes 134 and the plurality of second holes 136.

The plurality of first holes 134 are arranged on the first end surface T1 at two positions whose phases differ by 180 degrees or so along the circumference around the central axis O2 of the hole 49, and formed parallel to the central axis O2 of the hole 49 as holes with a circular cross section. The plurality of second holes 136 are arranged so as to face the plurality of the first holes 134 on the second end surface T2 at two positions whose phases differ by 180 degrees or so along the circumference of the motor case around the central axis O1 of the inner circumferential surface of the motor case 120b, and formed parallel to the central axis O1 as holes with a circular cross section. At this time, as shown in FIGS. 15 and 16, a circumferential width of ribs 130c formed on the outer surface of the motor case 120b is larger than that of the other ribs 130a and 130b. The bolt hole 125 is formed on one side along the circumference of the rib 130c with a larger circumferential width, and the second hole 136 is formed on the other side along the circumference thereof. The plurality of pins 138 are parallel pins with cylindrical outer surfaces and whose both end portions are simultaneously press-fitted into the first hole 134 and the second hole 136 so that they are aligned with each other.

Similarly to the configuration shown in FIGS 9A through 9D, this configuration also allows more precise alignment of the central axis O1 of the inner surface of the motor case 120 and the center axis O2 of the hole 49 formed in the transmission case 42b. The other configurations and actions of this example are the same as those of the embodiment shown in FIGS. 1 through 4, FIGS. 6 through 8, or FIGS. 9A through 9D.

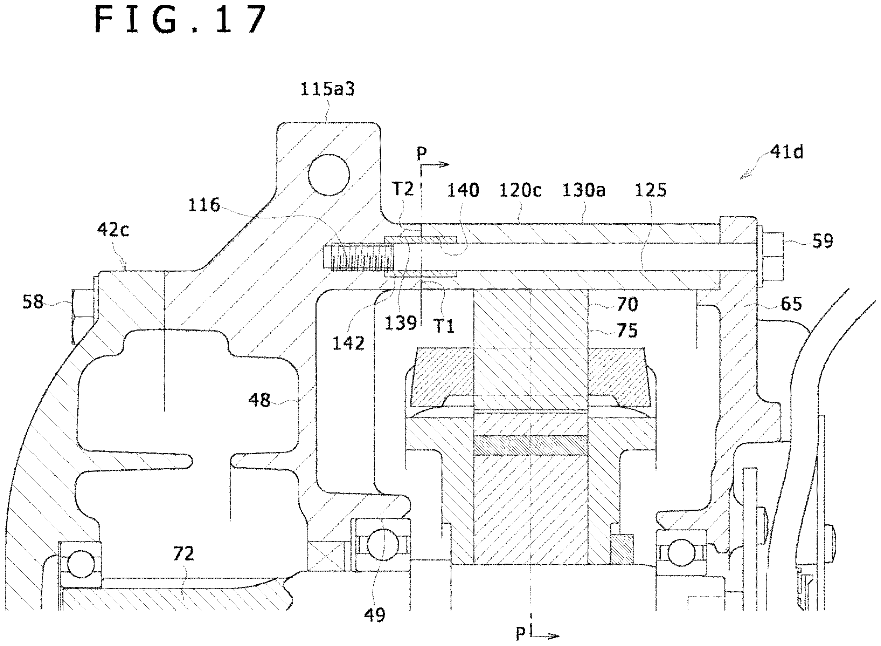

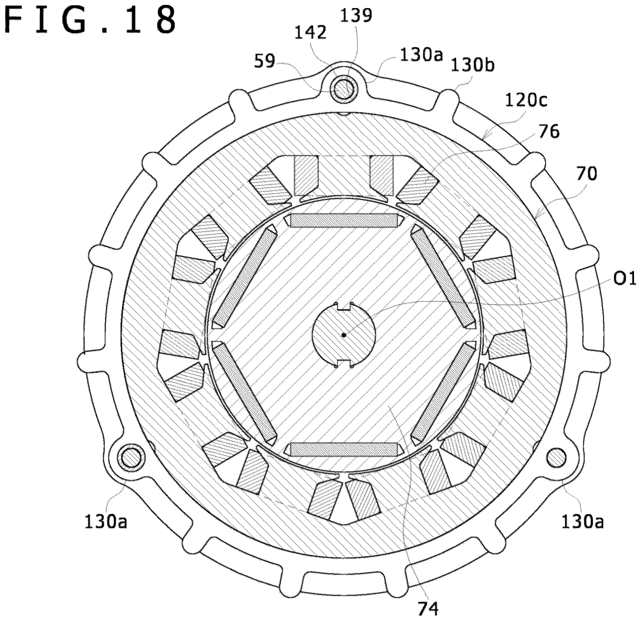

FIG. 17 is a partially enlarged diagram illustrating another example of a power transmission unit 41d different from the embodiment shown in FIG. 2B. FIG. 18 is a cross sectional view taken along line P-P of FIG. 17. In the configuration of this example, the centering structure to align the central axis of the hole 49 in a transmission case 42c with the central axis of the inner circumferential surface in the motor case 120c, to which the stator core 75 comprising the motor 70 is fixed, are formed in both the transmission case 42c and the motor case 120c. In this example, the centering structure is configured to include a plurality of first circular holes 139 formed on the first end surface T1 which is the end surface of a first case 115a3 comprising a transmission case 42c, which faces and is overlaid with the end surface of the motor case 120c, a plurality of second circular holes 140 formed on the second end surface T2 which is the end surface of a motor case 120c and overlaid with the first end surface T1, and a plurality of cylinders 142.

The plurality of first circular holes 138a are arranged on the first end surface T1 side associated with two threaded holes 116 among a plurality (e.g. three) of threaded holes 116 in the first case 115a3 whose central axis is aligned with the central axis of the threaded hole 116 and whose inner surface has a larger diameter than the threaded hole 116. The plurality of second circular holes 140 are arranged on the second end surface T2 side associated with two bolt holes 125 among a plurality (e.g., three) of bolt holes 125 each with a circular cross section in the motor case 120c whose central axis is aligned with the central axis of the bolt hole 125 and whose inner surface has a larger diameter than the bolt hole 125. The second circular hole 140 may be formed by machining after the motor case 120c other than the second circular hole 140 is formed by pultrusion molding, for example. The bolt hole 125 corresponds to an axial hole. The plurality of cylinders 142 are two metal cylindrical pins, which are in parallel with each other and each have a hollow structure, and whose both end portions are simultaneously press-fitted into the first circular hole 138 and the second circular hole 140 so that they are aligned with each other. The bolt 59 passes through the inside of each of the plurality of cylinders 142.

Similarly to the configuration shown in FIGS 9A through 9D, this configuration also allows more precise alignment of the central axis of the inner surface of the motor case 120c and the center axis of the hole 49 formed in the transmission case 42c. The other configurations and actions of this example are the same as those of the embodiment shown in FIGS. 1 through 4, FIGS. 6 through 8, or FIGS. 9A through 9D.

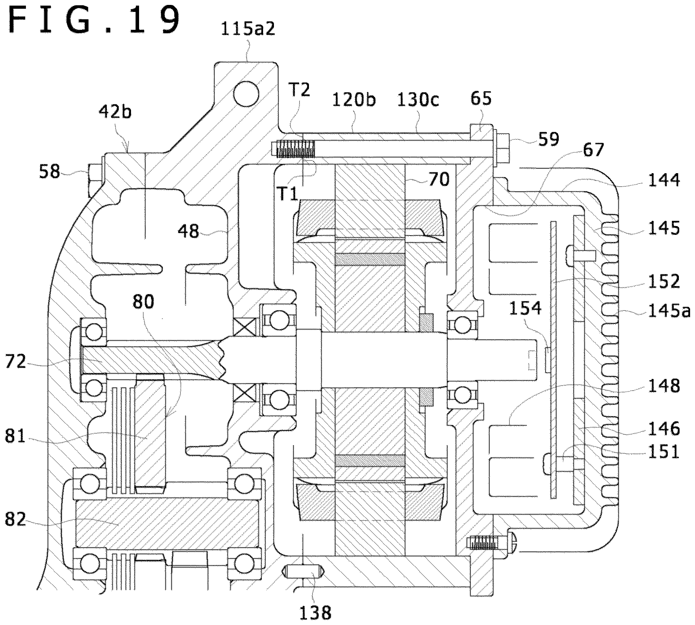

FIG. 19 is a diagram illustrating another example of a power transmission unit different from the embodiment shown in FIG. 14. In the configuration of this example, a bottomed cylindrical cap 144 made of metal or the like is screw-fixed to cover the recess 67 on the outside of the cover 65 in the vehicle-width direction, which is fixed on the side of the motor case 120b opposite to the transmission case 42b. In this example, a substrate 146 is fixed to the inner surface of a bottom plate 145 of the cap 144, and inverters 148 are installed on the substrate 146. This allows the inverters 148 to be attached to the cover 65. The inverters 148 convert DC power from the battery into three-phase AC power and supply it to the stator coil 76, for example. A plurality of heat-dissipating fins 145a are formed on the outer surface of the bottom plate 145 to dissipate the heat generated by the inverters 148 to the outside through the substrate 146. In addition, a rotation speed detecting device 154 to detect a rotation speed of the input shaft 72 may be provided on a portion of a plate part 152 fixed to the substrate 146 via a cylinder part 151 as a spacer for passing through a screw so that it faces a top end surface of the input shaft 72. The other configurations and actions of this example are the same as those of the embodiment shown in FIGS. 1 through 4 and FIGS. 6 through 8.

In the above-mentioned embodiments, similarly to the centering structure to perform centering between the transmission case 42a1 and the motor case 120 as shown in FIGS. 9A through 9C, a cylinder part protruding from the inside surface of the cover 65 to the motor case 120 side is formed as another centering structure, and the motor case 120 is fitted to the outer circumferential surface of the cylinder part. However, the configuration of the centering structure to perform centering between the cover and the motor case is not limited thereto. For example, similarly to the configuration shown in FIGS. 14 through 16 or FIGS. 17 and 18, a pin whose both ends are simultaneously fitted into a hole of the cover and a hole of the motor case, or a cylinder part whose both ends are simultaneously fitted into circular holes each with a larger diameter, which are formed on both the cover side end and the motor case side end of the through hole, through which the bolt to connect the cover and the motor case passes, may be employed as the centering structure between the cover and the motor case.

At least one embodiment mentioned above has the first configuration of the power transmission unit of the present disclosure. As a result, a power transmission unit is configured to include: a motor; and a transmission case to enclose an input shaft, an output shaft, and a gear mechanism that transmits driving power between the input shaft and the output shaft, wherein a motor case is attached to the transmission case on a side opposite the gear mechanism of the transmission case, and the motor case has a cylindrical shape whose cross section is constant throughout a direction orthogonal to an axial direction of the motor case, so that the manufacturing cost of the motor case can be reduced. Furthermore, when the motor case is made of metal with high thermal conductivity, since a larger heat dissipation member allows the heat of the motor located inside the motor case to be efficiently transferred from the motor case to the transmission case, the cooling performance of the motor can be improved. Furthermore, since a structure in which the motor is assembled inside the motor case can be used as a subassembly, it is possible to facilitate assembly work when manufacturing the power transmission unit. This enables a reduction in manufacturing cost of a power transmission unit in which the motor case is fixed to the transmission case.

Furthermore, in at least one embodiment mentioned above, a cover is fixed to the motor case to block an opening at an outer end in the axial direction of the motor case, the motor case is directly coupled to the transmission case, and a support to secure a bearing that supports a rotor shaft of the motor is provided on the transmission case side. This makes it possible to omit one of the covers on both sides which are originally required for the motor, thus lowering the cost. In addition, by omitting the motor cover on the transmission case side and coupling the motor case directly to the transmission case, the heat generated by the motor can easily escape to the transmission side, thus improving the cooling performance of the motor.

Furthermore, in at least one embodiment mentioned above, the motor case is made of metal or alloy whose main component is aluminum or copper. Since the motor case is made of metal or alloy whose main component is aluminum, the motor case can be made lightweight. Furthermore, when the motor case is made of metal with high thermal conductivity, since a larger heat dissipation member allows the heat of the motor located inside the motor case to be efficiently transferred from the motor case to the transmission case, the cooling performance of the motor can be improved.

At least one embodiment mentioned above has the second configuration of the power transmission unit of the present disclosure. This allows more precise alignment of the central axis of the inner surface formed in the motor case, to which the stator core of the motor is fixed, and the center axis of the hole formed in the transmission case, through which the motor shaft of the motor passes. As a result, since the assembly work of the motor case to the transmission case can be made easier, this enables a reduction of the manufacturing cost of the power transmission unit. In addition, since central axes of the motor rotor and stator core of the motor can be aligned more precisely, a rotational fluctuation of the motor can be suppressed, thus suppressing an increase of vibration and noise.

The invention may be summarized as a power transmission unit comprising: a motor; and a transmission case to enclose an input shaft, an output shaft, and a gear mechanism that transmits driving power between the input shaft and the output shaft, wherein a motor case is attached to the transmission case on a side opposite the gear mechanism of the transmission case, the motor case has a cylindrical shape whose cross section is constant throughout a direction orthogonal to an axial direction of the motor case, and the motor is placed inside the motor case.

The invention may be further summarized as the power transmission unit as defined above, wherein a cover is fixed to the motor case to block an opening at an outer end in the axial direction of the motor case, the motor case is directly coupled to the transmission case, and a support to secure a bearing that supports a rotor shaft of the motor is provided on a side of the transmission case.

The invention may be further summarized as the power transmission unit as defined above, wherein the motor case is made of metal or alloy whose main component is aluminum or copper.

The invention may also be summarized as a power transmission unit comprising: a motor; and a transmission case to enclose an input shaft, an output shaft, and a gear mechanism that transmits driving power between the input shaft and the output shaft, wherein the motor is disposed inside a motor case that is attached to the transmission case on a side opposite the gear mechanism of the transmission case, the input shaft functions as a motor shaft of the motor, the transmission case has a hole that the input shaft passes through, and a centering structure is provided at one or both of the transmission case and the motor case to align a center axis of the hole with a center axis of an inner circumferential surface of the motor case that fixes a stator core composing the motor.

The invention may be further summarized as the power transmission unit as defined above, wherein the centering structure is a cylinder that protrudes from an end surface on the motor case side of the transmission case so that the cylinder fits to the end on the transmission case side of the motor case.

The invention may be further summarized as the power transmission unit as previously defined, wherein the centering structure includes a plurality of first holes formed on a first end surface that is an end surface on a motor case side of the transmission case, a plurality of second holes formed on a second end surface of the motor case that is overlaid with the first end surface, and a plurality of pins to be fitted into both the plurality of first holes and the plurality of second holes.

The invention may be further summarized as the power transmission unit as previously defined, wherein the transmission case and the motor case are fixed with a plurality of bolts that pass through a plurality of axial holes formed in the motor case and are screwed into a plurality of threaded holes formed in the transmission case, and the centering structure includes: a plurality of first circular holes that are formed on a first end surface on the motor case side of the transmission case and on the first end surface side with respect to the plurality of threaded holes, and have a larger diameter than the plurality of threaded holes; a plurality of second circular holes that are formed on a second end surface of the motor case that is overlaid with the first end surface and on the second end surface side with respect to the plurality of axial holes, and have a larger diameter than the plurality of axial holes; and a plurality of cylinders that fit the first circular holes and the second circular holes and through which the bolts pass.

## Claims

1. A power transmission unit comprising:
a motor; and
a transmission case to enclose an input shaft, an output shaft, and a gear mechanism that transmits driving power between the input shaft and the output shaft,
wherein the motor is disposed inside a motor case that is attached to the transmission case on a side opposite the gear mechanism of the transmission case,
the input shaft functions as a motor shaft of the motor,
the transmission case has a hole that the input shaft passes through, and
a centering structure is provided at one or both of the transmission case and the motor case to align a center axis of the hole with a center axis of an inner circumferential surface of the motor case that fixes a stator core composing the motor.

2. The power transmission unit according to claim 1, wherein
the centering structure is a cylinder that protrudes from an end surface on the motor case side of the transmission case so that the cylinder fits to the end on the transmission case side of the motor case.

3. The power transmission unit according to claim 1, wherein the centering structure includes a plurality of first holes formed on a first end surface that is an end surface on a motor case side of the transmission case, a plurality of second holes formed on a second end surface of the motor case that is overlaid with the first end surface, and a plurality of pins to be fitted into both the plurality of first holes and the plurality of second holes.

4. The power transmission unit according to claim 1, wherein
the transmission case and the motor case are fixed with a plurality of bolts that pass through a plurality of axial holes formed in the motor case and are screwed into a plurality of threaded holes formed in the transmission case, and
the centering structure includes: a plurality of first circular holes that are formed on a first end surface on the motor case side of the transmission case and on the first end surface side with respect to the plurality of threaded holes, and have a larger diameter than the plurality of threaded holes; a plurality of second circular holes that are formed on a second end surface of the motor case that is overlaid with the first end surface and on the second end surface side with respect to the plurality of axial holes, and have a larger diameter than the plurality of axial holes; and a plurality of cylinders that fit the first circular holes and the second circular holes and through which the bolts pass.
